# EUROPEAN PATENT SPECIFICATION

(11) **EP 4 416 549 B1**
(45) Date of publication and mention of the grant of the patent: **06.05.2026**
(21) Application number: 22800940.3
(22) Date of filing: 11.10.2022
(51) Int. Cl.: G02B 27/01

(54) **CURVED SEE-THROUGH LIGHTGUIDE WITH INTERMEDIATE FOCUS**
GEBOGENER DURCHSICHTIGER LICHTLEITER MIT ZWISCHENFOKUS
GUIDE DE LUMIÈRE TRANSPARENT COURBE AVEC MISE AU POINT INTERMÉDIAIRE

(30) Priority: 15.10.2021 US 202163256044 P
(43) Date of publication of application: 21.08.2024
(73) Proprietor: Google LLC, Mountain View, CA 94043 (US)
(72) Inventor: GLIK, Eliezer, Mountain View, California 94043 (US); CAKMAKCI, Ozan, Mountain View, California 94043 (US)
(74) Representative: Maikowski & Ninnemann Patentanwälte Partnerschaft mbB
(86) International application number: PCT/US2022/046277
(87) International publication number: WO 2023/064271

(56) References cited:
- US-A1- 2018 284 460
- US-A1- 2021 014 473
- US-B2- 9 874 749

## Description

### BACKGROUND

Wearable electronic eyewear devices include optical systems that magnify a display image and deliver a virtual image into the field of view (FOV) of a user. In some cases, wearable electronic eyewear devices also allow the user to see the outside world through a lens or see-through eyepiece. Some wearable electronic eyewear devices incorporate a near-to-eye optical system to display content to the user. These devices are sometimes referred to as head-mounted displays (HMDs). For example, conventional HMD designs include a microdisplay positioned in a temple or rim region of a head wearable frame like a conventional pair of eyeglasses. The microdisplay generates images, such as computer-generated images (CGI), that are conveyed into the FOV of the user by optical elements such as curved lightguides deployed in the lens (or "optical combiner") of the head wearable display frame. The wearable electronic eyewear device can therefore serve as a hardware platform for implementing augmented reality (AR) or mixed reality (MR). Different modes of augmented reality include optical see-through augmented reality, video see-through augmented reality, or opaque (VR) modes.

US 2021/014473 A1 shows a head-mounted display comprising a microdisplay, an incoupler including an optics relay configured to provide light from the microdisplay to a curved lightguide such that an intermediate image is formed in the curved lightguide and an optical output system configured to receive the light based on the intermediate image and direct the light to an eye of a user as output light, wherein the optical output system includes a freeform corrector lens configured to correct distortions introduced by the curved lightguide to the real-world scene.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIGs. 1 and 2 together illustrate a head-mounted display (HMD) employing an optical combiner through which images projected by the HMD are displayed, in accordance with some embodiments.
FIG. 3 is a block diagram illustrating an example process for creating an intermediate image in a lightguide, in accordance with some embodiments.
FIG. 4 is a diagram illustrating an optics system for forming an intermediate image in a curved lightguide, in accordance with some embodiments.
FIG. 5 is a diagram illustrating an optical output system including a partial mirror outcoupler, in accordance with some embodiments.
FIG. 6 is a diagram illustrating an optical output system including a retroreflector, in accordance with some embodiments.
FIG. 7 is a diagram illustrating an optical output system including a wedge outcoupler, in accordance with some embodiments.

### SUMMARY OF EMBODIMENTS

The present invention relates to a head-mounted display according to independent claim 1 and to a corresponding image displaying method according to independent claim 12.

Techniques and systems described herein are directed to forming an intermediate image in a curved lightguide. According to an example embodiment, a head-mounted display can include a microdisplay configured to emit light representative of an image. Additionally, the head-mounted display may include an optics relay configured to receive the light representative of the image and provide the light to a curved lightguide such that an intermediate image based on the image is formed in the curved lightguide. Further, the curved lightguide can be configured to output light based on the intermediate image.

The head-mounted display can further include an optical output system configured to receive the light based on the intermediate image and reflect the light based on the intermediate image towards a lens of an optical combiner. The optical output system can include, for example, a retroreflector configured to receive the light based on the intermediate image and reflect the light based on the intermediate image back toward a portion of the curved lightguide. Further, for example, the optical output system can include a wedge-shaped outcoupler. Such a wedge-shaped outcoupler can include a reflective optical coating disposed on a surface of the wedge-shaped outcoupler. Also, for example, the optical output system may include a partial mirror outcoupler configured to reflect the light based on the intermediate image towards the lens of the optical combiner. Additionally, the optics relay can be configured to magnify the image by a predetermined power.

The lightguide of the head-mounted display can include one or more freeform surfaces. Further, the head-mounted display can include an F stop configured to filter at least a portion of the light representative of the image. Also, the intermediate image may be based on the filtered at least a portion of the light representative of the image.

In another example embodiment, a lightguide can include an incoupler that has an optics relay configured to relay light emitted from a microdisplay representative of an image to a portion of the lightguide such that an intermediate image based on the image is formed at a predetermined location in the portion of the lightguide. Additionally, the lightguide can include a first non-planar major surface and a second non-planar major surface configured to reflect light received from the incoupler and provide the light to an optical output system configured to output light based on the intermediate image.

Further, the optics relay can be configured to magnify the image by a predetermined power. The optical output system can, for example, include a partial mirror outcoupler configured to output the light based on the intermediate image towards an eye of a user. Additionally, the optical output system can, for example, include a wedge-shaped outcoupler. The wedge-shaped outcoupler may include a reflective optical coating disposed on a surface of the wedge-shaped outcoupler. Also, the optical output system may, for example, include a retroreflector configured to receive the light based on the intermediate image and reflect the light based on the intermediate image back toward a second portion of the lightguide. The optical output system can be included within the lightguide.

Additionally, the incoupler can include one or more freeform surfaces. Also, at least a portion of the light emitted from the microdisplay representative of the image may be filtered by an F stop. The intermediate image can be based on the filtered at least a portion of the light emitted from the microdisplay representative of the image.

In another example embodiment, a method can include emitting, by a microdisplay, light representative of an image. Further, the method can include receiving, at an optics relay, the light representative of the image and providing, by the optics relay, the light to a curved lightguide such that an intermediate image based on the image is formed in the curved lightguide.

Additionally, the method can include outputting, by the lightguide, light based on the intermediate image to an optical output system configured to receive the output light based on the intermediate image and reflect the output light towards a lens of an optical combiner. The optical output system can include, for example, a retroreflector configured to receive the light based on the intermediate image and reflect the light based on the intermediate image back towards a portion of the curved lightguide. Further, the optical output system can include, for example, a wedge-shaped outcoupler. The wedge-shaped outcoupler may include a reflective optical coating disposed on a surface of the wedge-shaped outcoupler. Additionally, the optical output system can include, for example, a partial mirror outcoupler configured to reflect the light based on the intermediate image to an eye of a user.

Further, the method can include magnifying, by the optics relay, the image by a predetermined power. Also, the curved lightguide may include one or more freeform surfaces. Additionally, the method can include filtering, by an F stop, at least a portion of the light representative of the image. The intermediate image can be based on the filtered at least a portion of the light representative of the image

### DETAILED DESCRIPTION

Head-mounted displays (HMDs) potentially have multiple practical and leisure applications, but the development and adoption of wearable electronic display devices have been limited by constraints imposed by the optics, aesthetics, manufacturing process, thickness, field of view (FOV), and prescription lens limitations of the optical systems used to implement existing display devices. For example, the geometry and physical constraints of conventional designs result in displays having relatively small FOVs and relatively thick optical combiners.

Further, though the optical performance of an HMD is an important factor in its design, users also care significantly about aesthetics of wearable devices. Independent of their performance limitations, many of the conventional examples of wearable heads-up displays have struggled to find traction in consumer markets because, at least in part, they lack fashion appeal. Some wearable HMDs employ planar (flat) lightguides in planar transparent combiners and, as a result, appear very bulky and unnatural on a user's face compared to the sleeker and more streamlined look of typical curved eyeglass and sunglass lenses. Thus, it is desirable to integrate curved lenses with lightguides in wearable heads-up displays or eyewear in order to achieve the form factor and fashion appeal expected of the eyeglass and sunglass frame industry.

In designing an HMD, design and weight considerations advantageously suggest a thin optical combiner (e.g., on the order of about 2 mm in some embodiments described herein) and a minimal optical element count. These considerations imply challenges in terms of optical aberration correction and, therefore, image quality. For example, due to geometry, power, and physical constraints of these optical combiners, unwanted aberrations and ghosting occur in the outcoupled light, due to, for example, light inside these optical combiners interacting with light from outside sources, surfaces of the optical combiner, or both through undesired reflections or diffraction.

As used herein, the term "lightguide" refers to an optical combiner using total internal reflection (TIR), partial internal reflection (PIR), specialized filters, reflective surfaces, reflective optical coatings (e.g., metallization, interference coatings) to propagate a display light generated by a light engine from an incoupler of the lightguide towards an outcoupler of the lightguide (typically toward an eye of a human user when in operation as part of a wearable display device) via a number of internal reflective interactions of the display light within an internal volume of the lightguide. For example, a lightguide includes one or more reflective optical coatings configured to cause reflections that propagate light from an incoupler of a lightguide to an outcoupler of a lightguide. As another example, a lightguide uses TIR, PIR, or both to propagate light from an incoupler of a lightguide to an outcoupler of a lightguide. In general, the terms "incoupler" and "outcoupler" will be understood to refer to any type of optical structure utilized to direct the display light into or out of the internal volume of the lightguide, respectively. Further, it will be appreciated that light impinging on the interface of a lightguide surface at an angle of incidence that is greater than a critical angle of the lightguide internally reflects within the lightguide via TIR; in contrast, light impinging on the interface of the lightguide surface at an angle of incidence that is less than that critical angle experiences only PIR.

To help an HMD achieve a desired form factor and improve user experience, systems and techniques described herein are directed to reducing the size of optical combiner while also reducing artifacts and ghosting in the optical combiner. To achieve this aim, an HMD includes a curved lightguide having an incoupler with one or more optical structures (e.g., optics relays) configured to form an intermediate image at a predetermined location in the curved lightguide. For example, an HMD includes a microdisplay configured to emit light representative of an image (e.g., forming the image) and provide the emitted light to an incoupler of a curved waveguide. The incoupler of the curved lightguide includes an optics relay with one or more lenses configured to relay the emitted light from the microdisplay to another portion curved lightguide. To relay the emitted light, the optics relay is configured to invert, magnify, or both the image represented by the emitted light from the microdisplay and provide the relayed light to another portion of the curved lightguide such that an intermediate image (e.g., intermediate image plane) based on the image emitted by the microdisplay is formed within the portion of the curved lightguide at a predetermined location. For example, the optics relay is configured to magnify the image emitted by the microdisplay such that an intermediate image based on the magnified image emitted by the microdisplay is formed at a predetermined location in a portion curved lightguide. The curved light guide then provides (e.g., via TIR, PIR, reflective optical coatings) the intermediate image (e.g., the light forming the intermediate image) to an optical output system included in or otherwise coupled to the curved lightguide. The optical output system, for example, includes one or more outcouplers (e.g., partial-mirror outcouplers, wedge-shaped outcouplers), lightguides, mirrors, retroreflectors, or any combination thereof and is configured to provide the intermediate image (e.g., the light forming the intermediate image) to the eye of the user. For example, the optical output system includes a partial mirror outcoupler configured to provide light received from a portion of the curved lightguide to the eye of a user. As another example, the optical output system includes a retroreflector configured to reflect light received from a portion of the curved lightguide back at the curved lightguide such that the light is then reflected toward the eye of a user. As yet another example, the optical output system includes a wedge-shaped outcoupler including, for example, a lightguide having a first curved surface, and a second, non-parallel curved surface. Within the wedge-shaped outcoupler, light propagates via PIR, TIR, or both with each bounce of light off the surfaces of the wedge-shaped outcoupler having a respective (e.g., distinct) angle of incidence. Once the light in the wedge-shaped outcoupler bounces off a surface of the wedge-shaped outcoupler at a predetermined angle of incidence, the light is transmitted by an opposite surface toward the eye of a user.

By using an incoupler including an optics relay to form an intermediate image in a curved lightguide, the required size (e.g., minimum length) of the optical output system is reduced as the magnification applied by the optics relay to the image emitted by the microdisplay to form the intermediate image increases. As such, increasing the magnification applied by the optics relay to the image emitted by the microdisplay allows for the optical output system, the curved lightguide, or both to be smaller (e.g., shorter). Having a smaller optical output system, curved lightguide, or both allows an HMD to more easily achieve the form factor and fashion appeal expected of the eyeglass and sunglass frame industry, improving user experience. Additionally, forming an intermediate image in a curved lightguide helps reduce the number of aberrations and ghosting in the outcoupled light (e.g., outcoupled image) by reducing unwanted interactions or diffraction with light from outside sources (e.g., light from outside the HMD), surfaces of the lightguide, or both.

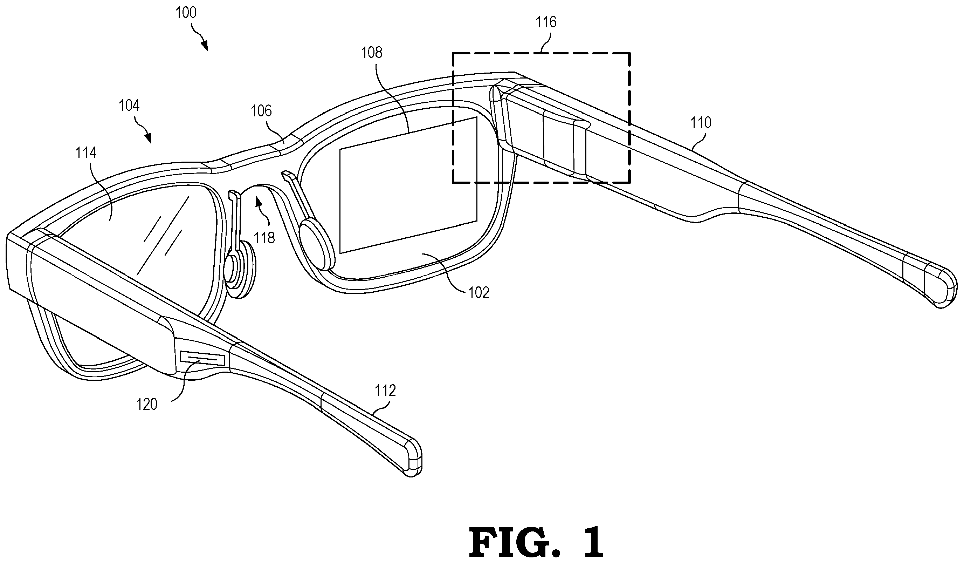

FIG. 1 illustrates an example HMD 100 employing an optical combiner 102 through which images projected by the HMD are displayed. The HMD 100 has a support structure 104 that includes a frame 106, which houses a microdisplay including, for example, a laser microdisplay, light-emitting diode (LED) display, microLED display, organic light-emitting diode (OLED) display, adaptive matrix organic light-emitting diode (AMOLED) display, liquid crystal on silicon (LCOS) display, or any combination thereof, and configured to generate visible light in order to project images toward the eye of a user via the optical combiner 102, such that the user perceives the projected images as being displayed in a field of view (FOV) area 108 through the optical combiner 102. Such images include, for example, one or more graphical interface images displayable in an AR environment, displayable on HMD 100, or both

Support structure 104 also includes components to allow the support structure 104 to be worn in a position in front of a user's eyes. Examples of such components are arms 110 and 112 to be supported by a user's ears. A strap, or straps (not shown), configured to be worn around a user's head, on top of a user's head, or both may be used in place of one or more of the arms in some embodiments to secure the support structure 104 in front of a user's eyes. In some embodiments, the HMD 100 is symmetrically configured as a binocular display such that lens element 114 is also an optical combiner and a microdisplay is housed in the portion of the frame 106 proximate to arm 112 to project images to a FOV area within lens element 114. Frame 106 also includes a nose bridge 118 disposed between optical combiner 102 and lens elements 114.

In the depicted example, the HMD 100 is a near-eye display system in which the support structure 104 is configured to be worn on the head of a user and has a general shape and appearance (or "form factor") of an eyeglasses frame. The support structure 104 contains or otherwise includes various components to facilitate the projection of images toward the eye of the user, for example, a processing system (not shown), optical system, or both. In some embodiments, the support structure 104 further includes various sensors, for example, one or more front-facing cameras, rear-facing cameras, other light sensors, motion sensors, accelerometers, or any combination thereof, to name a few. According to embodiments, the support structure 104 further includes one or more connection interfaces, as well as radio frequency (RF) interfaces or other wireless interfaces, for example, a Bluetooth(TM) interface, a WiFi interface, or both, to name a couple. Further, in some embodiments, the support structure 104 includes one or more batteries or other portable power sources for supplying power to the electrical and processing components, for example, one or more processors of a processing system of the HMD 100. In some embodiments, some or all of these components of the HMD 100 are fully or partially contained within an inner volume of support structure 104, such as within arm 110 and the portion of the frame 106 in region 116 of the support structure 104. It should be noted that while an example form factor is depicted, in other embodiments the HMD 100 may have a different shape and appearance from the eyeglasses frame depicted in FIG. 1.

In the depicted embodiment, optical combiner 102 of the HMD 100 provides an AR display in which rendered graphical content can be superimposed over or otherwise provided in conjunction with a real-world view as viewed by the user through optical combiner 102. For example, light used to form a perceptible image or series of images may be projected by a microdisplay of the HMD 100 to an eyebox via a series of optical elements, such as a lightguide formed at least partially in optical combiner 102, and one or more lenses and/or filters disposed between the microdisplay and the lightguide. Optical combiner 102 includes at least a portion of a lightguide that routes display light received by an incoupler of the lightguide to an eye of a user of the HMD 100. In addition, optical combiner 102 is sufficiently transparent to allow a user to see through optical combiner 102 to provide a field of view of the user's real-world environment such that the image appears superimposed over at least a portion of the user's real-world environment.

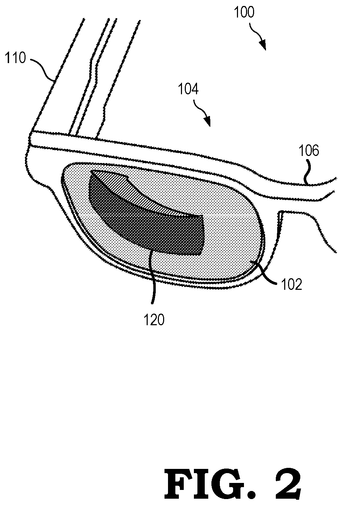

Referring now to FIG. 2, optical combiner 102 of the HMD 100 includes a lightguide 120 formed by a substrate including opposing major surfaces. Lightguide 120 is configured to receive the light representative of an image (e.g., light used to form a perceptible image or series of images) from a microdisplay and uses TIR, PIR, reflective optical coatings (metallization, interference coatings), specialized filters, grating surfaces, reflective surfaces, or any combination thereof to transfer the light to another point, for example, the eye of a user. For example, lightguide 120 is configured to receive one or more beams of laser light (e.g., beams each having respective wavelengths) representative of an image from a microdisplay and provide at least a portion of the beams of light to the eye of a user. To this end, lightguide 120 includes one or more incouplers configured to receive light from the microdisplay. Such incouplers include spherical surfaces, freeform surfaces, reflective optical coatings, grating structures (e.g., diffraction gratings, holograms, holographic optical elements, volume diffraction gratings, volume holograms, surface relief diffraction gratings, surface relief holograms), or any combination thereof configured to receive light emitted from a microdisplay and provide at least a portion of the light to another portion of the lightguide 120
According to embodiments, lightguide 120 is configured to transfer light from an incoupler to one or more optical output systems included in or otherwise coupled to lightguide 120 and configured to provide received light to the lens of optical combiner 102, the eye of a user, or both. For example, lightguide 120 includes one or more surfaces (e.g., spherical surfaces, freeform surfaces), reflective optical coatings (e.g., metallization, interference coatings), gratings (e.g., diffraction gratings, holograms, holographic optical elements, volume diffraction gratings, volume holograms, surface relief diffraction gratings, surface relief holograms), or any combination thereof configured to transfer light from an incoupler to one or more optical output systems included in or otherwise coupled to lightguide 120. Such optical output systems include, for example, partial mirror outcouplers, lightguides, mirrors, wedge-shaped outcouplers, retroreflectors, or any combination thereof configured to provide received light to an eye of a user. For example, lightguide 120 is configured to transfer light from an incoupler to a partial mirror outcoupler included in lightguide 120 and configured to provide the light to a lens of optical combiner 102, an eye of the user, or both. As another example, lightguide 120 is configured to transfer light from an incoupler to a retroreflector configured to reflect the light received from lightguide 120 back at lightguide 120 (e.g., at a curved mirror of lightguide 120) such that the light is then reflected towards the eye of a user. As yet another example, lightguide 120 is configured to transfer light from an incoupler to a wedge-shaped outcoupler (e.g., an outcoupler including a first curved surface, a second, non-parallel curved surface, and one or more reflective optical coatings disposed on the surfaces) included in lightguide 120 and configured to provide the light to a lens of optical combiner 102, an eye of the user, or both. In embodiments, one or more outcouplers (e.g., partial mirror outcouplers, wedge outcouplers) of an optical output system include one or more freeform surfaces, spherical surfaces, reflective optical coatings (e.g., metallization, interference coatings), grating structures (e.g., diffraction gratings, holograms, holographic optical elements, volume diffraction gratings, volume holograms, surface relief diffraction gratings, surface relief holograms), or any combination thereof configured to receive light from the lightguide 120 and provide at least a portion of the light to a lens of optical combiner 102, the eye of a user, or both.

According to embodiments, lightguide 120 includes a curved lightguide. That is to say, the substrate forming lightguide 120 has a shape including one or more curves (e.g., a curved shape). For example, the substrate forming lightguide 120 has a curved shape complementary to one or more typical curved eyeglass and sunglass lenses. To this end, lightguide 120 includes a first major surface of a substrate (e.g., a world-facing surface farthest from a user) and a second, opposite major surface of a substrate (e.g., an eye-face surface nearest to a user). In embodiments, the first major surface, second major surface, or both of the substrate forming lightguide 120 are non-planar, for example, each of the major surfaces has one or more radii of curvature about one or more axes.

In embodiments, lightguide 120 is configured to receive light emitted from a microdisplay by way of one or more optics relays. For example, the incoupler of lightguide 120 includes an optics relay (not pictured for clarity) configured to receive light emitted by a microdisplay representative of one or more images. The optical relay then relays the light emitted from the microdisplay to another portion of lightguide 120. An optics relay, for example, includes one or more lenses configured to receive light and relay the light to a second point such that an optical system including the relay is extended (e.g., the focal length of the optical system including the optics relay is increased). To this end, an optics relay relays light representative of an image such that an intermediate image (e.g., intermediate image plane) based on the image (e.g., a replica of the image) is formed at a predetermined location within a portion of the optical system. As an example, an optics relay configured to receive light emitted from a microdisplay representative of an image and is configured to provide the light to lightguide 120 such that an intermediate image (e.g., intermediate image plane) based on the image (e.g., a replica of the image) forms at a predetermined location within lightguide 120. In embodiments, the optics relay is configured to form an intermediate image such that the intermediate image is magnified, inverted, or both when compared to the relayed image (e.g., relayed light representative of an image). That is to say, the optics relay magnifies, inverts, or both, an image formed by received light (e.g., emitted light representative of the image from a microdisplay) to form an intermediate image. For example, the optics relay magnifies an image formed by received light by a predetermined power to form an intermediate image in a portion lightguide 120.

After the intermediate image is formed in lightguide 120, lightguide 120 is configured to provide (e.g., via TIR, PIR, reflective optical coatings) light representative of the intermediate image (e.g., the light forming the intermediate image in lightguide 120) to one or more optical output systems (e.g., partial mirror outcouplers, lightguides, wedge-shaped outcouplers, retroreflectors) configured to output at least a portion of the intermediate image (e.g., light forming the intermediate image) to a lens of optical combiner 102, an eye of a user, or both. In embodiments, the optical output system has a length (e.g., minimum length) based on the magnification applied by the optics relay to an emitted image to form the intermediate image in lightguide 120. That is to say, the length of the output system is based on the predetermined power of magnification the optics relay magnifies an image by to form an intermediate image in lightguide 120. For example, as the predetermined power of magnification increases (e.g., the optics relay magnifies an image by a higher predetermined power to form the intermediate image), the minimum length of the optical output system decreases. In this way, the size (e.g., minimum length) of an optical output system included in or otherwise coupled to lightguide 120 is reduced, allowing the size (e.g., length, thickness) of optical combiner 102, lightguide 120, the optical output system, or any combination thereof to be reduced. Reducing the size of optical combiner 102, lightguide 120, the optical output system, or any combination thereof helps HMD 100 achieve a form factor and fashion appeal expected of an eyeglass or sunglass frame, improving user experience. Further, forming an intermediate image in lightguide 120 helps reduce the number of aberrations and ghosting in the light (e.g., image) outcoupled to the eye of the user by reducing unwanted interactions or diffraction of the light within lightguide 120 with light from outside sources (e.g., light from outside the HMD 100), surfaces of lightguide 120, or both.

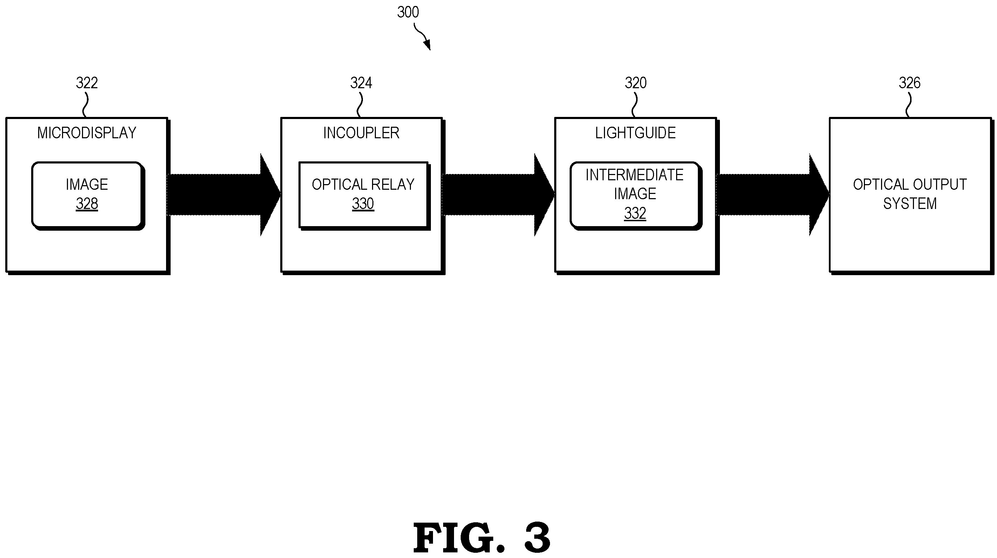

Referring now to FIG. 3, an example process 300 for creating an intermediate image in a portion of a lightguide is presented. In embodiments, the example process 300 first includes a microdisplay 322 emitting light representative of (e.g., forming) an image 328. Such a microdisplay 322 includes, for example, a laser microdisplay, LED display, microLED display, OLED display, AMOLED display, LCOS display, one or more scan mirrors (e.g., micro-electro-mechanical systems (MEMS) mirror) or any combination thereof, configured to emit light representative of (e.g., forming) image 328. Image 328 includes, for example, one or more graphical interface images displayable in an AR environment, displayable on HMD 100, or both. In example process 300, the light representative of image 328 emitted by microdisplay 322 is received at incoupler 324 of a lightguide 320, similar to or the same as lightguide 120. According to embodiments, incoupler 324 includes optical relay 330 configured to receive the light representative of image 328 emitted by microdisplay 322. Optics relay 330 includes, for example, one or more lenses configured to receive light and relay the received light to a second point such that an intermediate image 332 (e.g., intermediate image plane) is formed a predetermined distance away from optics relay 330. As an example, optics relay 330 includes a 2f relay, 4f relay, or both configured to receive light and relay the light to a second point such that an intermediate image 332 is formed at an intermediate focal plane a predetermined distance (e.g., a predetermined distance based on the one or more lenses of optics relay 330) away from optics relay 330. In response to receiving the light representative of image 328 emitted by microdisplay 322, optics relay 330 is configured to relay the received light to at least another portion (e.g., main body) of lightguide 320, similar to or the same as lightguide 120, such that an intermediate image 332 (e.g., intermediate image plane) based on the image 328 (e.g., a replica of the image 328) is formed within at least a portion lightguide 320. As an example, optics relay 330 relays received light such that an intermediate image 332 is formed at a predetermined point within lightguide 320 based on the properties of the lenses of optics relay 330, the configuration of the lenses of optics relay 330, or both.

In embodiments, optics relay 330 magnifies, inverts, or both image 328 to form intermediate image 332. For example, optics relay 330 magnifies image 328 by a predetermined power when forming intermediate image 332 in lightguide 320. The predetermined power of the magnification is based, for example, on one or more properties of the lenses of optics relay 330, a configuration of the lenses of optics relay 330, or both. According to embodiments, optics relay 330 is configured to form intermediate image 332 as a filtered image. As an example, optics relay 330 includes one or more field stops configured to filter at least a portion of image 328 (e.g., by blocking at least a portion of the light forming image 328) before intermediate image 332 is formed based on the filtered image 328 (e.g., based on the unblocked portions of image 328). By using a field stop in this way, intermediate image 332 is filtered to reduce unwanted rays, and trim the field of view. As such, image artifacts produced by the microdisplay are hidden. Furthermore, filtering intermediate images in this way impacts the frequency space, improving image quality of intermediate image 332.

According to embodiments, incoupler 324 further includes one or more surfaces, gratings, or both configured to provide the relayed light from optics relay 330 to a portion (e.g., main body) of lightguide 320 such that intermediate image 332 is formed at a predetermined location within lightguide 320. For example, incoupler 324 includes one or more freeform surfaces, spherical surfaces, reflective optical coatings, grating structures (e.g., diffraction gratings, holograms, holographic optical elements, volume diffraction gratings, volume holograms, surface relief diffraction gratings, surface relief holograms), or any combination thereof configured to transfer light. Freeform surfaces include, for example, a surface of lightguide 320 with no continuous translational or rotational symmetry about one or more axes and configured to apply pre-distortion to intermediate image 332 when it is formed within a predetermined portion of lightguide 320. Such pre-distortion (e.g., compensation) of intermediate image 332, for example, is configured to at least partially cancel out distortion added to light (e.g., intermediate image 332) when its output by optical output system 326. In embodiments, lightguide 320 is configured to provide intermediate image 332 (e.g., the light forming intermediate image 332) to optical output system 326 included in or otherwise coupled to lightguide 320. Optical output system 326 includes, for example, partial mirror outcouplers, lightguides, mirrors, wedge-shaped outcouplers, retroreflectors, or any combination thereof configured to provide intermediate image 332 (e.g., the light forming intermediate image 332) to a lens of an optical combiner, the eye of a user, or both. For example, optical output system 326 includes a wedge-shaped outcoupler within lightguide 320 configured to provide intermediate image 332 to the eye of a user. As another example, optical output system 326 includes one or more retroreflectors included in or otherwise coupled to lightguide 320 configured to reflect light forming intermediate image 332 back to lightguide 320 (e.g., a curved mirror of lightguide 320) such that the light forming intermediate image 332 is reflected at the eye of a user.

In embodiments, optical output system 326 has a length (e.g., minimum length) based on the magnification of intermediate image 332 by optics relay 330. That is to say, the length of optical output system 326 is based on the predetermined power of magnification optics relay 330 applies to image 328 to form intermediate image 332. To this end, as the predetermined power of magnification applied by optics relay 330 to image 328 increases, for example, the length required for optical output system 326 decreases. In this way, the size (e.g., length) of optical output system 326 included in or otherwise coupled to lightguide 320 is reduced. As such, the length of any partial mirror outcouplers, lightguides, mirrors, wedge-shaped outcouplers, retro reflectors, or any combination thereof included in optical output system 326 is reduced, helping an HUD including optical output system 326 to achieve a form factor with a fashion appeal expected of an eyeglass or sunglass frame, improving user experience. Further, forming intermediate image 332 at a predetermined location (e.g., portion) of lightguide 320 helps reduce unwanted interactions or diffraction of the light within lightguide 320 with light from outside sources (e.g., light from outside the HMD 100), surfaces of lightguide 320, or both. As such, the number of aberrations and ghosting in the light (e.g., image) outcoupled to the eye of the user are reduced, improving user experience.

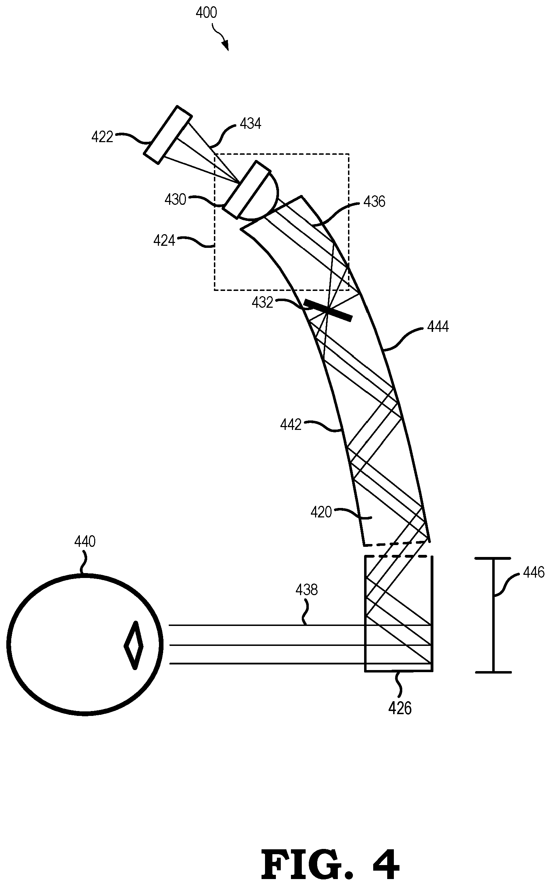

Referring now to FIG. 4, an optics system 400 for forming an intermediate image in a curved lightguide is presented. To this end, optics system 400 includes microdisplay 422, similar to or the same as microdisplay 322, configured to emit light 434 representative of (e.g., forming) an image, similar to or the same as image 328. For example, microdisplay 422 emits light 434 representative of one or more graphical interface images displayable in an AR environment, displayable on HMD 100, or both. Referring now to the example embodiment illustrated in FIG. 4, light 434 is represented by three rays each representing, for example, a respective wavelength of light, however, in other embodiments, light 434 can include any number of rays each representing any number of wavelengths of light. Microdisplay 422 includes, for example, a laser microdisplay, LED display, microLED display, OLED microdisplay, AMOLED microdisplay, LCOS microdisplay, one or more scan mirrors (e.g., MEMS mirrors) or any combination thereof, configured to emit light 434 representative of an image. Optics system 400 further includes curved lightguide 420, similar to or the same as lightguides 120, 320, that includes incoupler 424. Incoupler 424 is configured to provide received light to another portion (e.g., main body) of curved lightguide 420 by TIR, PIR, optical reflective optical coatings (e.g., metallization, interference coatings), or any combination thereof. To provide relayed light 436 to another portion (e.g., main body) of curved lightguide 420 via TIR, PIR, optical reflective coatings, or any combination thereof, incoupler 424 includes freeform surfaces (e.g., surfaces with no continuous translational or rotational symmetry about axes), spherical surfaces, optical reflective coatings, grating structures (e.g., diffraction gratings, holograms, holographic optical elements, volume diffraction gratings, volume holograms, surface relief diffraction gratings, surface hologram gratings), or any combination thereof, configured to provide received light to a portion (e.g., main body) of curved lightguide 420.

In embodiments, incoupler 424 includes optics relay 430 configured to receive light 434 from microdisplay 422. Optics relay 430 includes, for example, one or more lenses configured to receive light and relay such light (e.g., provide the light) to a second predefined point such that optical system 400 (e.g., optical path of the optical system 400) is extended (e.g., the focal length of optical system 400 is increased compared to an optical system without optics relay 430). As an example, optics relay 430 includes one or more lenses forming a 2F lens relay, 4F lens relay, or both configured to provide relayed light 436 to a predetermined second point such that optical system 400 is extended. In embodiments, optics relay 430 is configured to provide relayed light 436 such that the relayed light 436 forms an intermediate image 432 (e.g., intermediate image plane), similar to or the same as intermediate image 332, a predetermined distance away from optics relay 430. Such a predetermined distance, for example, is based on the properties of one or more lenses of optics relay 430, a configuration of one or more lenses of optics relay 430, or both. Optics relay 430 is further configured to magnify, invert, or both the image represented by light 434 to form intermediate image 432. For example, optics relay 430 is configured to magnify the image represented by light 434 by a predetermined power to form intermediate image 432. In this way, intermediate image 432 is magnified by the predetermined power when compared to the image represented by light 434. Additionally, in embodiments, optics relay 430 is configured to filter the image represented by light 434 to form intermediate image 432. For example, optics system 400 includes an f-stop configured to filter the image by blocking at least a portion of the image represented by light 434 (e.g., the f-stop blocks at least a portion of light 434) and optics relay 430 forms intermediate image 432 based on the filtered image. In this way, optics relay 430 forms a filtered intermediate image 432 based on the light 434 not blocked by, for example, an f-stop. By using an f-stop in this way, intermediate image 432 is filtered to reduce unwanted rays, and trim the field of view. As such, image artifacts produced by microdisplay 422 are hidden. Furthermore, filtering intermediate image 432 in this way impacts the frequency space, improving image quality of intermediate image 432.

According to embodiments, incoupler 424 is configured to provide light relayed from optics relay 430 to another portion of curved lightguide 420 (e.g., main body of curved lightguide 420). Curved lightguide 420 includes a first major surface 444 of a substrate (e.g., a world-facing surface farthest from a user) and a second, opposite major surface 442 of a substrate (e.g., an eye-facing surface nearest to a user). In embodiments, the first major surface 444, second major surface 442, or both of the substrate are non-planar, for example, each of the major surfaces 442, 444 has one or more radii of curvature about one or more axes. In embodiments, incoupler 424 is configured to provide relayed light 436 to curved lightguide 420 such that relayed light 436 forms intermediate image 432 (e.g., an intermediate image plane) within curved lightguide 420. For example, incoupler 424 is configured to provide relayed light 436 to curved lightguide 420 such that intermediate image 432 forms at a predetermined location within curved lightguide 420 based on the properties of the lenses of optics relay 430, the configuration of the lenses of optics relay 430, one or more surfaces of incoupler 424 (e.g., one or more surfaces of curved lightguide 420 included in incoupler 424), or any combination thereof. According to embodiments, incoupler 424 includes one or more freeform surfaces configured to provide relayed light 436 to another portion (e.g., main body) of curved lightguide 420 such that intermediate image 432 is formed at a predetermined location within curved lightguide 420. Such freeform surfaces, for example, are configured to apply pre-distortion to intermediate image 432 when it is formed within curved lightguide 420. The pre-distortion (e.g., compensation) of intermediate image 432, for example, is configured to at least partially cancel out distortion added to relayed light 436 (e.g., intermediate image 432) when its output by optical output system 426 as output light 438.

Curved lightguide 420 (e.g., main body of curved lightguide 420) is configured to provide intermediate image 432 (e.g., the light forming intermediate image 432) to optical output system 426, similar to or the same as optical output system 326. To provide intermediate image 432 to optical output system 426, curved lightguide 420 includes freeform surfaces (e.g., surfaces with no continuous translational or rotational symmetry about axes), spherical surfaces, reflective optical coatings, grating structures (e.g., diffraction gratings, holograms, holographic optical elements, volume diffraction gratings, volume holograms, surface relief diffraction gratings, surface hologram gratings), or any combination thereof, configured to provide intermediate image 432 to optical output system 426. Optical output system 426 is included in or otherwise coupled to curved lightguide 420 and is configured to receive intermediate image 432 (e.g., light forming intermediate image 432) and provide intermediate image 432 to the eye 440 of a user as output light 438. That is to say, optical output system 426 is configured to guide intermediate image 432 output from curved lightguide 420 to the eye 440 of a user as output light 438. To this end, optical output system 426 includes one or more partial mirror outcouplers, wedge-shaped outcouplers, retroreflectors, lightguides, mirrors, or any combination thereof configured to provide intermediate image 432 (e.g., relayed light 436 forming intermediate image 432) to the eye 440 of a user as output light 438. For example, optical output system 426 includes a partial mirror outcoupler included in curved lightguide 420 and configured to provide intermediate image 432 (e.g., relayed light 436) to the eye 440 of the user as output light 438. In embodiments, the image (e.g., intermediate image 432) formed by output light 438 includes distortion of the image applied by, for example, surfaces of optical output system 426, outside light (e.g., light from outside HMD 100), or both. Such distortion of output light 438, for example, is complementary to pre-distortion applied to relayed light 436 by one or more freeform grating structures of incoupler 424, curved lightguide 420, optical output system 426, or any combination thereof. That is to say, the distortion of output light 438 cancels out at least a portion (e.g., all) of the pre-distortion applied to relayed light 436 by one or more freeform grating structures of incoupler 424, curved lightguide 420, optical output system 426, or any combination thereof.

According to embodiments, optical output system 426 has a length 446 (e.g., minimum length) that is based on the magnification applied to the image represented by light 434 to form intermediate image 432. For example, the length 446 (e.g., minimum length) of optical output system 426 is based on the predetermined power of magnification optics relay 430 applies to the image represented by light 434 to form intermediate image 432. As the predetermined power of magnification applied by optics relay 430 to the image represented by light 434 increases, for example, the length 446 (e.g., minimum length) required for optical output system 426 decreases. In this way, the size (e.g., length) of optical output system 426 included in or otherwise coupled to curved lightguide 420 is reduced. As such, the required length of any partial mirror outcouplers, lightguides, wedge-shaped outcouplers, retroreflectors, mirrors, or any combination thereof included in optical output system 426 is reduced.

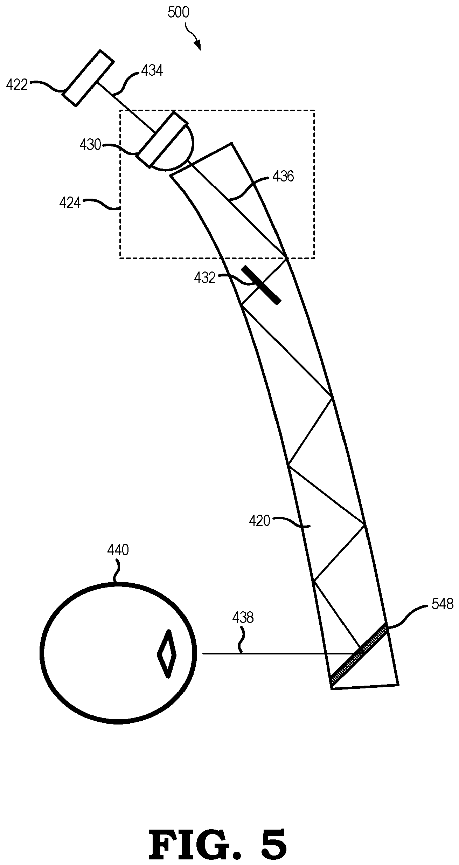

Referring now to FIGs. 5 to 7, an optical system 500 including an example optical output systems is presented. In embodiments, optical system 500, similar to or the same as optical system 400, includes microdisplay 422 configured to emit light 434 representative of an image to incoupler 424 of curved lightguide 420. Referring to the example embodiments illustrated in FIGs. 5 to 7, light 434 is represented as a single ray representing any number of wavelengths of light, however, in other embodiments, light 434 can include any number of rays representing any number of wavelengths of light. Incoupler 424 includes optics relay 430 that receives light 434 emitted from microdisplay 422 and relays light 434 (e.g., as relayed light 436) such that intermediate image 432 is formed in a predetermined portion (e.g., a predetermined location in the main body) of curved lightguide 420. Curved lightguide 420 then provides intermediate image 432 (e.g., the light representing intermediate image 432) to an optical output system similar to or the same as optical output system 326, 426 configured to output intermediate image 432 to the eye 440 of a user as output light 438. Referring now to FIG. 5, in embodiments, the optical output system includes partial mirror outcoupler 548. Partial mirror outcoupler includes, for example, a partial mirror having two opposing surfaces and configured to reflect light having a first angle of incidence relative to the surface of the partial mirror and to transmit light having a second, different angle of incidence relative to the surface of the partial mirror. For example, partial mirror outcoupler 548 includes a partial mirror disposed within curved lightguide 420 such that light received at the partial mirror having a first predetermined angle of incidence (e.g., an angle of incidence due to TIR or PIR of light within curved lightguide 420) is reflected towards the eye 440 of user.

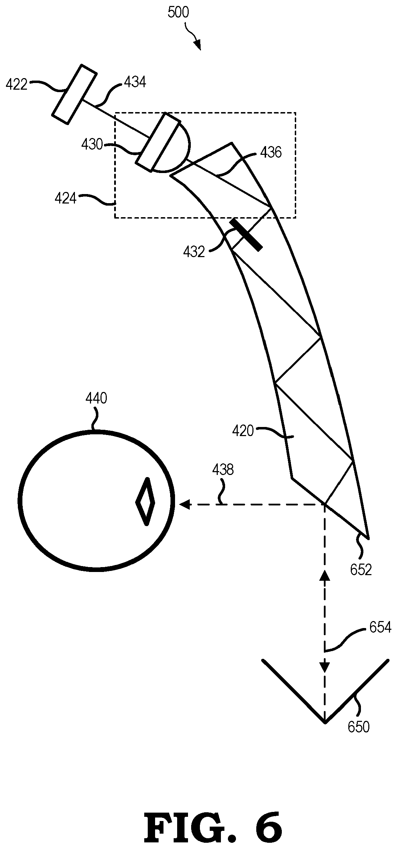

Referring now to FIG. 6, in embodiments, the optical output system includes a curved mirror (e.g., partial mirror) 652, included within or on a surface of curved lightguide 420, and one or more retroreflectors 650. Retroreflector 650 includes, for example, one or more reflective surfaces together configured to reflect received light back toward the direction of the light source of the received light. According to embodiments, curved lightguide 420 provides light representative of intermediate image 432 to curved mirror (e.g., partial mirror) 652 which is then configured to transmit light representative of intermediate image 432 to retroreflector 650 as light 654. After receiving light 654, retroreflector 650 reflects light 654 back toward curved mirror 652 which is then configured to reflect light 654 to the eye 440 of a user as output light 438.

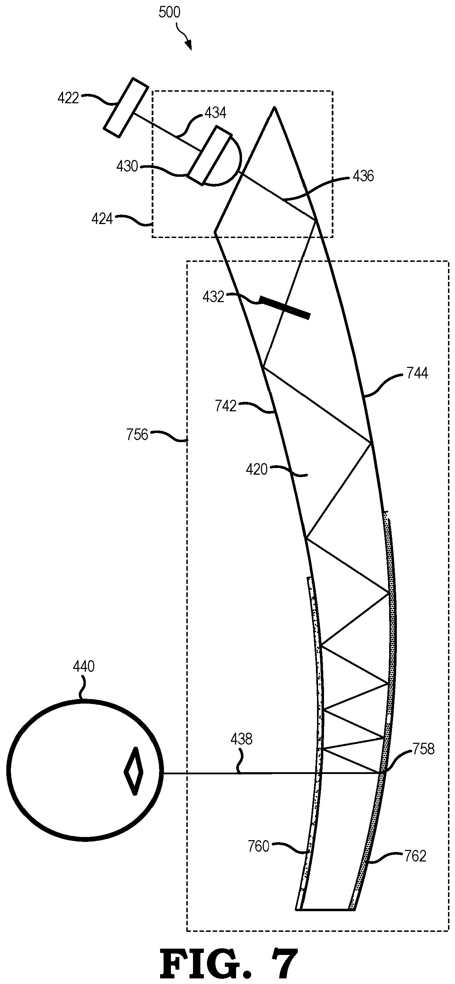

Referring now to FIG. 7, according to embodiments, the optical output system includes wedge-shaped outcoupler 756 included in (e.g., forming at least a portion of) curved lightguide 420. Wedge-shaped outcoupler 756 includes, for example, at least a portion of curved lightguide 420 having a first curved surface (e.g., eye-facing surface) 742 closest to the user, and a second, opposing, non-parallel curved surface (e.g., world-facing surface) 744 furthest from the user. Each surface 742, 744 includes freeform surfaces, spherical surfaces, reflective optical coatings (e.g., metallization, interference coatings), or any combination thereof. Due to surfaces 742, 744 of wedge-shaped outcoupler 756 being curved and non-parallel, light is configured to travel by TIR, PIR, optical coatings, or any combination before it is provided to the eye 440 of the user. Further, as light propagates through wedge-shaped outcoupler 756, each successive bounce or reflection of light off the surfaces 742, 744 of wedge-shaped outcoupler 756 have a smaller (e.g., narrower) angle of incidence. That is to say, the respective angle of incidence at each bounce of light is distinct. Referring to the example embodiment illustrated in FIG. 7, as light representative of intermediate image 432 propagates through wedge-shaped outcoupler 756, each bounce (e.g., reflection) of the light representative of intermediate image 432 off surfaces 742, 744 has a respective angle of incidence, with each successive angle of incidence becoming narrower. Once light (e.g., light representative of intermediate image 432) bounces off a surface 742, 744 of wedge-shaped outcoupler 756 at an angle of incidence equal to a predetermined angle of incidence, the light is reflected off the surface 742, 744 such that it passes through the opposite surface 742, 744. (e.g., user-facing surface) of wedge-shaped outcoupler. As an example, referring to the illustrative embodiment of FIG. 7, the light representative of intermediate image 432 bounces off surface (e.g., world-facing surface) 744 at point 758 at an angle of incidence equal to a predetermined angle of incidence. As such, the light representative of intermediate image 432 reflects off surface 744 at point 758 such that the light passes through surface 742 (e.g., eye-facing surface) of wedge-shaped outcoupler 756 and towards the eye 440 of a user as output light 438.

According to embodiments, wedge-shaped outcoupler 756 further includes reflective optical coating 760 disposed on surface 742 (e.g., eye-facing surface) of wedge-shaped outcoupler 756 and a second reflective optical coating 762 disposed on surface 744 (e.g., world-facing surface) of wedge-shaped outcoupler 756. Such reflective optical coatings 760, 762 include, for example, metallization, interference coatings, or both and are configured to increase optical efficiency (that is, reduce the portion of display light lost) of PIR of relayed light 436 as it propagates through wedge-shaped outcoupler 756. For example, if light representative of intermediate image 432 bounces off a surface 742, 744 of wedge-shaped outcoupler 756 at an angle of incidence less than a predetermined critical angle of incidence, a PIR will occur and at least a portion of the light representative of intermediate image 432 will be transmitted out of the surface 742, 744 of wedge-shaped outcoupler 756. To help prevent this light lost from the PIR, the reflective optical coatings 760, 762 are configured to reflect the lost light (e.g., a portion of the light representative of intermediate image 432 that would otherwise be transmitted out of the surface 742, 744 of wedge-shaped outcoupler 756) back towards the opposing surface 742, 744 of wedge-shaped outcoupler 756. In certain embodiments, the reflective optical coatings 760, 762 provide relatively high reflectivity for interactions with light internal to wedge-shaped outcoupler 756 while remaining substantially transparent to allow transmission of ambient light from the real world through wedge-shaped outcoupler 756 towards the eye 440 of a user.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A head-mounted display (100), comprising:
a microdisplay (422) configured to emit light (434) representative of an image; and
an incoupler (424) including an optics relay (430) configured to receive the light (434) representative of the image and provide the light (434) to a curved lightguide (420) such that an intermediate image (432) based on the image is formed in the curved lightguide (420),
wherein the curved lightguide (420) is configured to output light based on the intermediate image (432),
an optical output system (426) configured to receive the light based on the intermediate image (432) and direct the light to an eye (440) of a user as output light (438), wherein
the incoupler (424) comprises freeform grating structures, and wherein the freeform grating structures of the incoupler (424) are configured to apply a pre-distortion to light forming the intermediate image (432), wherein a distortion of the output light (438) applied by, for example, surfaces of the optical output system (426), outside light, or both, cancels out at least a portion of the pre-distortion.

2. The head-mounted display (100) of claim 1, wherein
the optical output system (426) is configured to direct the light based on the intermediate image (432) towards a lens of an optical combiner.

3. The head-mounted display (100) of claim 2, wherein the optical output system (426) comprises a retroreflector configured to receive the light based on the intermediate image (432) and
reflect the light based on the intermediate image (432) back toward a portion of the curved lightguide (420), the portion of the curved lightguide (420) being configured to reflect the light to the eye (440) of the user.

4. The head-mounted display (100) of claim 2, wherein the optical output system (426) comprises a wedge-shaped outcoupler.

5. The head-mounted display (100) of claim 4, wherein the wedge-shaped outcoupler includes a reflective optical coating disposed on a surface of the wedge-shaped outcoupler.

6. The head-mounted display (100) of claim 2, wherein the optical output system (426) comprises a partial mirror outcoupler configured to reflect the light based on the intermediate image (432) towards the lens of the optical combiner.

7. The head-mounted display (100) of claim 2, wherein the optics relay (430) is configured to magnify the image by a predetermined power to form the intermediate image (432).

8. The head-mounted display (100) of any of claims 1 to 7, wherein the curved lightguide (420) includes one or more freeform surfaces.

9. The head-mounted display (100) of any of claims 1 to 8, further comprising an F stop configured to filter at least a portion of the light representative of an image.

10. The head-mounted display (100) of claim 9, wherein the intermediate image (432) is based on the filtered at least a portion of the light representative of the image.

11. The head-mounted display (100) of any of claims 1 to 10, wherein the lightguide (420) comprises
a first non-planar major surface and a second non-planar major surface configured to reflect light received from the incoupler (424) and provide the light to the optical output system (426).

12. A method, comprising:
emitting, by a microdisplay (422), light representative of an image;
receiving, at an incoupler (424) including an optics relay (430), the light representative of the image; and
providing, by the optics relay (430), the light to a curved lightguide (420) such that an intermediate image (432) based on the image is formed in the curved lightguide (420),
receiving, by an optical output system (426), the light based on the intermediate image (432) and directing the light to an eye (440) of a user as output light, whereir
the incoupler (424) comprises freeform grating structures; and
applying a pre-distortion to light forming the intermediate image (432) by the freeform grating structures of the incoupler (424) so that a distortion of the output light applied by, for example, surfaces of the optical output system (426), outside light, or both, cancels out at least
a portion of the pre-distortion.

13. The method of claim 12, wherein the optical output system (426) is configured to reflect
the light based on the intermediate image (432) towards a lens of an optical combiner.

14. The method of claim 13, wherein the optical output system (426) comprises
a retroreflector configured to receive the light based on the intermediate image (432) and
reflect the light based on the intermediate image (432) back towards a portion of the curved lightguide (420), the portion of the curved lightguide (420) being configured to reflect the light to the eye (440) of the user.

## Patentansprüche

1. Am Kopf getragene Anzeige (100), umfassend:
ein Mikrodisplay (422), das konfiguriert ist, um Licht (434) auszustrahlen, das einem Bild entspricht; und
einen Einkoppler (424), der ein Optik-Relais (430) umfasst, das konfiguriert ist, um das Licht (434), das dem Bild entspricht, zu empfangen und das Licht (434) an einen gekrümmten Lichtleiter (420) derart bereitzustellen, dass ein Zwischenbild (432) basierend auf dem Bild in dem gekrümmten Lichtleiter (420) gebildet wird,
wobei der gekrümmte Lichtleiter (420) konfiguriert ist, um Licht basierend auf dem Zwischenbild (432) auszugeben,
ein optisches Ausgabesystem (426), das konfiguriert ist, um das Licht basierend auf dem Zwischenbild (432) zu empfangen und das Licht an ein Auge (440) eines Benutzers als Ausgabelicht (438) zu leiten, wobei der Einkoppler (424) Freiform-Gitterstrukturen umfasst, und wobei die Freiform-Gitterstrukturen des Einkopplers (424) konfiguriert sind, um eine Vorverzerrung auf Licht anzuwenden, das das Zwischenbild (432) bildet, wobei eine Verzerrung des Ausgabelichts (438), die beispielsweise durch Oberflächen des optischen Ausgabesystems (426), Außenlicht oder
beides angewendet wird, zumindest einen Teil der Vorverzerrung aufhebt.

2. Am Kopf getragene Anzeige (100) nach Anspruch 1, wobei das optische Ausgabesystem (426) konfiguriert ist, um das Licht basierend auf dem Zwischenbild (432) in Richtung einer Linse eines optischen Kombinierers zu leiten.

3. Am Kopf getragene Anzeige (100) nach Anspruch 2, wobei das optische Ausgabesystem (426) einen Retroreflektor umfasst, der konfiguriert ist, um das Licht basierend auf dem Zwischenbild (432) zu empfangen und das Licht basierend auf dem Zwischenbild (432) zurück in Richtung eines Teils des gekrümmten Lichtleiters (420) zu reflektieren, wobei der Teil des gekrümmten Lichtleiters (420) konfiguriert ist, um das Licht an das Auge (440) des Benutzers zu reflektieren.

4. Am Kopf getragene Anzeige (100) nach Anspruch 2, wobei das optische Ausgabesystem (426) einen keilförmigen Auskoppler umfasst.

5. Am Kopf getragene Anzeige (100) nach Anspruch 4, wobei der keilförmige Auskoppler eine reflektierende optische Beschichtung umfasst, die auf einer Oberfläche des keilförmigen Auskopplers angeordnet ist.

6. Am Kopf getragene Anzeige (100) nach Anspruch 2, wobei das optische Ausgabesystem (426) einen Teilspiegel-Auskoppler umfasst, der konfiguriert ist, um das Licht basierend auf dem Zwischenbild (432) in Richtung der Linse des optischen Kombinierers zu reflektieren.

7. Am Kopf getragene Anzeige (100) nach Anspruch 2, wobei das Optik-Relais (430) konfiguriert ist, um das Bild um eine vorbestimmte Stärke zu vergrößern, um das Zwischenbild (432) zu bilden.

8. Am Kopf getragene Anzeige (100) nach einem der Ansprüche 1 bis 7, wobei der gekrümmte Lichtleiter (420) eine oder mehrere Freiformflächen umfasst.

9. Am Kopf getragene Anzeige (100) nach einem der Ansprüche 1 bis 8, ferner umfassend eine Aperturblende, die konfiguriert ist, um zumindest einen Teil des Lichts, das einem Bild entspricht, zu filtern.

10. Am Kopf getragene Anzeige (100) nach Anspruch 9, wobei das Zwischenbild (432) auf dem gefilterten zumindest einen Teil des Lichts basiert, das dem Bild entspricht.

11. Am Kopf getragene Anzeige (100) nach einem der Ansprüche 1 bis 10, wobei der Lichtleiter (420) eine erste nicht-planare Hauptoberfläche und eine zweite nicht-planare Hauptoberfläche umfasst, die konfiguriert sind, um von dem Einkoppler (424) empfangenes Licht zu reflektieren und das Licht an das optische Ausgabesystem (426) bereitzustellen.

12. Verfahren, umfassend:
Ausstrahlen, durch ein Mikrodisplay (422), von Licht, das einem Bild entspricht;
Empfangen, an einem Einkoppler (424), der ein Optik-Relais (430) umfasst, des Lichts, das dem Bild entspricht; und
Bereitstellen, durch das Optik-Relais (430), des Lichts an einen gekrümmten Lichtleiter (420) derart, dass ein Zwischenbild (432) basierend auf dem Bild in dem gekrümmten Lichtleiter (420) gebildet wird,
Empfangen, durch ein optisches Ausgabesystem (426), des Lichts basierend auf dem Zwischenbild (432) und
Leiten des Lichts an ein Auge (440) eines Benutzers als Ausgabelicht, wobei der Einkoppler (424) Freiform-Gitterstrukturen umfasst; und
Anwenden einer Vorverzerrung auf Licht, das das Zwischenbild (432) bildet, durch die Freiform-Gitterstrukturen des Einkopplers (424), so dass eine Verzerrung des Ausgabelichts, die beispielsweise durch Oberflächen des optischen Ausgabesystems (426), Außenlicht oder beides angewendet wird, zumindest einen Teil der Vorverzerrung aufhebt.

13. Verfahren nach Anspruch 12, wobei das optische Ausgabesystem (426) konfiguriert ist, um das Licht basierend auf dem Zwischenbild (432) in Richtung einer Linse eines optischen Kombinierers zu reflektieren.

14. Verfahren nach Anspruch 13, wobei das optische Ausgabesystem (426) einen Retroreflektor umfasst, der konfiguriert ist, um das Licht basierend auf dem Zwischenbild (432) zu empfangen und das Licht basierend auf dem Zwischenbild (432) zurück in Richtung eines Teils des gekrümmten Lichtleiters (420) zu reflektieren, wobei der Teil des gekrümmten Lichtleiters (420) konfiguriert ist, um das Licht an das Auge (440) des Benutzers zu reflektieren.

## Revendications

1. Dispositif d'affichage monté sur la tête (100), comprenant :
un micro-afficheur (422) configuré pour émettre une lumière (434) représentative d'une image ; et
un coupleur d'entrée (424) comportant un relais optique (430) configuré pour recevoir la lumière (434) représentative de l'image et fournir la lumière (434) à un guide d'onde incurvé (420) de sorte qu'une image intermédiaire (432) basée sur l'image soit formée dans le guide d'onde incurvé (420),
dans lequel le guide d'onde incurvé (420) est configuré pour émettre une lumière sur la base de l'image intermédiaire (432), un système optique de sortie (426) configuré pour recevoir la lumière sur la base de l'image intermédiaire (432) et diriger la lumière vers un œil (440) d'un utilisateur en tant que lumière de sortie (438), dans lequel le coupleur d'entrée (424) comprend des structures de réseau à surface libre, et dans lequel les structures de réseau à surface libre du coupleur d'entrée (424) sont configurées pour appliquer une pré-distorsion à la lumière formant l'image intermédiaire (432), dans lequel une distorsion de la lumière de sortie (438) appliquée par, par exemple, des surfaces du système optique de sortie (426), la lumière ambiante, ou les deux, annule au moins une partie de la pré-distorsion.

2. Dispositif d'affichage monté sur la tête (100) selon la revendication 1, dans lequel le système optique de sortie (426) est configuré pour diriger la lumière sur la base de l'image intermédiaire (432) vers une lentille d'un combineur optique.

3. Dispositif d'affichage monté sur la tête (100) selon la revendication 2, dans lequel le système optique de sortie (426) comprend un rétroréflecteur configuré pour recevoir la lumière sur la base de l'image intermédiaire (432) et réfléchir la lumière sur la base de l'image intermédiaire (432) vers une portion du guide d'onde incurvé (420), la portion du guide d'onde incurvé (420) étant configurée pour réfléchir la lumière vers l'œil (440) de l'utilisateur.

4. Dispositif d'affichage monté sur la tête (100) selon la revendication 2, dans lequel le système optique de sortie (426) comprend un coupleur de sortie en forme de coin.

5. Dispositif d'affichage monté sur la tête (100) selon la revendication 4, dans lequel le coupleur de sortie en forme de coin comporte un revêtement optique réfléchissant disposé sur une surface du coupleur de sortie en forme de coin.

6. Dispositif d'affichage monté sur la tête (100) selon la revendication 2, dans lequel le système optique de sortie (426) comprend un coupleur de sortie à miroir partiel configuré pour réfléchir la lumière sur la base de l'image intermédiaire (432) vers la lentille du combineur optique.

7. Dispositif d'affichage monté sur la tête (100) selon la revendication 2, dans lequel le relais optique (430) est configuré pour agrandir l'image à raison d'une puissance prédéterminée afin de former l'image intermédiaire (432).

8. Dispositif d'affichage monté sur la tête (100) selon l'une quelconque des revendications 1 à 7, dans lequel le guide d'onde incurvé (420) comporte une ou plusieurs surfaces à forme libre.

9. Dispositif d'affichage monté sur la tête (100) selon l'une quelconque des revendications 1 à 8, comprenant en outre un F-stop configuré pour filtrer au moins une partie de la lumière représentative d'une image.

10. Dispositif d'affichage monté sur la tête (100) selon la revendication 9, dans lequel l'image intermédiaire (432) est basée sur l'au moins une partie filtrée de la lumière représentative de l'image.

11. Dispositif d'affichage monté sur la tête (100) selon l'une quelconque des revendications 1 à 10, dans lequel le guide d'onde (420) comprend une première surface principale non plane et une seconde surface principale non plane configurées pour réfléchir la lumière reçue en provenance du coupleur d'entrée (424) et fournir la lumière au système optique de sortie (426).

12. Procédé, comprenant :
l'émission, par un micro-afficheur (422), d'une lumière représentative d'une image ;
la réception, au niveau d'un coupleur d'entrée (424) comportant un relais optique (430), de la lumière représentative de l'image ; et
la fourniture, par le relais optique (430), de la lumière à un guide d'onde incurvé (420), de sorte qu'une image intermédiaire (432) basée sur l'image soit formée dans le guide d'onde incurvé (420), la réception,
par un système optique de sortie (426), de la lumière sur la base de l'image intermédiaire (432) et
la direction de ladite lumière vers un œil (440) d'un utilisateur en tant que lumière de sortie, dans lequel le coupleur d'entrée (424) comprend des structures de réseau à surface libre ; et l'application d'une prédistorsion à la lumière formant l'image intermédiaire (432) par les structures de réseau de forme libre du coupleur d'entrée (424) de sorte qu'une distorsion de la lumière de sortie appliquée par, par exemple, les surfaces du système optique de sortie (426), la lumière extérieure ou les deux, annule au moins une partie de la prédistorsion.

13. Procédé selon la revendication 12, dans lequel le système optique de sortie (426) est configuré pour réfléchir la lumière sur la base de l'image intermédiaire (432) vers une lentille d'un combineur optique.

14. Procédé selon la revendication 13, dans lequel le système optique de sortie (426) comprend un rétroréflecteur configuré pour recevoir la lumière sur la base de l'image intermédiaire (432) et réfléchir la lumière sur la base de l'image intermédiaire (432) vers une portion du guide d'onde incurvé (420), la portion du guide d'onde incurvé (420) étant configurée pour réfléchir la lumière vers l'œil (440) de l'utilisateur.
